# EUROPEAN PATENT APPLICATION

(11) **EP 4 825 801 A1**
(43) Date of publication of application: **21.10.2026**
(21) Application number: 24904455.3
(22) Date of filing: 13.12.2024
(51) Int. Cl.: C01D 7/00, C01F 11/46

(54) **METHOD FOR MANUFACTURING SODIUM BICARBONATE USING SODIUM SULFATE AND PH ADJUSTER**

(30) Priority: 14.12.2023 KR 20230182355
(71) Applicant: POSCO Holdings Inc., Pohang-si, Gyeongsangbuk-do 37859 (KR); Research Institute of Industrial Science & Technology, Pohang-si, Gyeongsangbuk-do 37673 (KR)
(72) Inventor: BYUN, Young-Chul, Gwangyang-si, Jeollanam-do 57798 (KR); MIN, Jung-Gi, Pocheon-si, Gyeonggi-do 11185 (KR); KIM, Hwan-Ki, Gwangju 61135 (KR); LEE, Young-Bong, Gwangyang-si, Jeollanam-do 57809 (KR); LIM, Jong-Tae, Gwangyang-si, Jeollanam-do 57781 (KR)
(74) Representative: Pfenning, Meinig & Partner mbB
(86) International application number: PCT/KR2024/096992
(87) International publication number: WO 2025/127892

(57) **Abstract**

The present invention relates to a method for manufacturing sodium bicarbonate using sodium sulfate and a pH adjuster and, more specifically, to a method for manufacturing sodium bicarbonate, comprising the steps of: forming an alkaline sodium sulfate solution containing sodium sulfate (Na₂SO₄) and a pH adjuster; and adding carbon dioxide and ammonia into the alkaline sodium sulfate solution to generate sodium bicarbonate (NaHCO₃).

## Description

### Technical Field

The present disclosure relates to a method for manufacturing sodium bicarbonate using sodium sulfate and a pH adjuster, and more specifically, to a method for increasing solubility of carbon dioxide, thereby reducing an amount of ammonia used and improving yield of sodium bicarbonate.

### Background Art

Sodium bicarbonate (NaHCO₃) is a compound that can be produced by a reaction of sodium (Na) and carbon dioxide (CO₂) and is a substance, which is white at room temperature and is widely used as a remover to remove sulfur oxides emitted as exhaust gas for industrial purposes, as well as a raw material for detergents and an antacid for medical purposes. Soda ash (sodium carbonate, lime, Na₂CO₃) is a substance produced by heating sodium bicarbonate and is used in a process for manufacturing glass and is also used as a raw material for manufacturing soap or detergent, along with sodium bicarbonate.

The most widely used method for producing such sodium bicarbonate and soda ash is the Solvay process. The Solvay process is a process of dissolving salt (sodium chloride, NaCl) in water to produce salt water, then dissolving ammonia and carbon dioxide to produce sodium bicarbonate, and then heating the sodium bicarbonate again to produce soda ash. The carbon dioxide used in the Solvay process is generated by decomposing lime (calcium carbonate, CaCO3), and the Solvay process includes a process of producing calcium chloride by reacting the quicklime produced in this process with a waste liquid remaining after producing sodium bicarbonate.

Meanwhile, with the recent increase in interests in the environment and carbon neutrality, an amount of sodium sulfate (Na₂SO₄) generated is increasing. First, sodium bicarbonate may be used to remove sulfur oxides (SOₓ) emitted from chimneys, and sodium sulfate is produced as shown in the formula below, by the reaction between sulfur oxides included in exhaust gas and sodium bicarbonate.

2NaHCO₃ (s) + SO₂ (g) + 1/2O₂ (g) → Na₂SO₄ (s) + 2CO₂ (g) + H₂O (g)

When sulfur oxides are emitted into the atmosphere, which may cause acid rain and the sulfur oxides act as precursors that can form ultrafine dust, such that related regulations are being strengthened. For this reason, an amount of sodium bicarbonate used is increasing in businesses emitting sulfur oxides, and as a result, the amount of sodium sulfate generated is also increasing.

Meanwhile, there is growing global demand for carbon neutrality to curb climate change. In order to achieve carbon neutrality, suppressing carbon dioxide emissions from transportation is of the utmost importance. To meet such goals, a supply amount of electric vehicles is rapidly increasing, and a production amount of secondary batteries used as batteries of electric vehicles is also rapidly increasing. To produce secondary batteries, a process for producing lithium, nickel, a precursor, or the like, is required, and a recycling process using waste batteries is also important. Such a process requires extraction of materials, such as lithium, nickel, or the like, which are raw materials, from ores or waste batteries, and the use of caustic soda and sulfuric acid is included as an essential process for such extraction. In the process using caustic soda and sulfuric acid, the production of sodium sulfate as a by-product is inevitable. For this reason, as environmental regulations are strengthened worldwide and the secondary battery business expands, the amount of sodium sulfate generated is also increasing significantly, and the issue of dealing with such a large amount of sodium sulfate is also increasing significantly.

Since the sodium sulfate contains sodium, if a technology for producing sodium bicarbonate and soda ash using sodium sulfate is developed, it could be a good alternative for dealing with the large amount of sodium sulfate due to strengthened environmental regulations and the production of secondary battery materials. However, a sodium sulfate solution has different chemical properties than the conventional salt solution. The most representative difference is the type of anion dissolved in the solution. While salt forms chloride ions, sodium sulfate contains sulfate ions, and sodium sulfate generated after sulfur oxide is removed and sodium sulfate generated in a process of producing a secondary battery material have different characteristics from the salt water solution used in the conventional Solvay process, in terms of an impuritycontaining material and an amount of impurities. Therefore, there is an urgent need for improved technology for the sodium bicarbonate and soda ash process using sodium sulfate solutions with these characteristics.

### Summary of Invention

### Technical Problem

An aspect of the present disclosure is to provide a method for manufacturing sodium bicarbonate, which can increase the yield of sodium bicarbonate by increasing an amount of CO₂ dissolved while reducing an amount of ammonia, added to a carbonation reaction.

### Solution to Problem

According to an aspect of the present disclosure, a method for manufacturing sodium bicarbonate is provided, the method including forming an alkaline sodium sulfate solution containing sodium sulfate (Na₂SO₄) and a pH adjuster; and adding carbon dioxide and ammonia to the alkaline sodium sulfate solution to produce sodium bicarbonate (NaHCO₃).

### Advantageous Effects of Invention

According to the present disclosure, according to a method for manufacturing sodium bicarbonate using a sodium sulfate solution, by mixing a pH adjuster into a sodium sulfate-containing solution, a basic sodium sulfate solution may be formed, accordingly, by increasing the dissolution of carbon dioxide, added to a carbonation reaction, an amount of ammonia used in the process of producing sodium bicarbonate may be reduced, and the yield of sodium bicarbonate may also be increased. Therefore, it is expected that the efficiency of the process of producing sodium bicarbonate using sodium sulfate may be improved.

### Brief Description of Drawings

FIG. 1 schematically illustrates an exemplary process flow diagram of the present disclosure.
FIG. 2(a) is a graph illustrating a change in yield of sodium bicarbonate according to an amount of Na₂CO₃ added, and FIG. 2(b) is a graph illustrating a change in yield of sodium bicarbonate according to an amount of NaOH added.
FIG. 3 is a graph illustrating a change in yield of sodium bicarbonate according to a content of Na₂CO₃ and an amount of ammonia added.
FIG. 4 schematically illustrates a flow of an exemplary device that can be used in a method for manufacturing sodium bicarbonate using sodium sulfate and a pH adjuster of the present disclosure.

### Best Mode for Invention

Hereinafter, preferred embodiments of the present disclosure will be described with reference to the attached drawings. However, the embodiments of the present disclosure may be modified in various other forms, and the scope of the present disclosure is not limited to the embodiments described below.

According to a method for manufacturing sodium bicarbonate of the present disclosure, by forming an alkaline sodium sulfate solution using sodium sulfate (Na₂SO₄) and further including a pH adjuster, the dissolution of carbon dioxide may be increased, and further, the amount of ammonia used may be reduced, as well as the yield of sodium bicarbonate may be increased.

More specifically, the method for manufacturing sodium bicarbonate of the present disclosure includes forming an alkaline sodium sulfate solution containing sodium sulfate (Na₂SO₄) and a pH adjuster; and adding carbon dioxide and ammonia to the alkaline sodium sulfate solution to produce sodium bicarbonate (NaHCO₃).

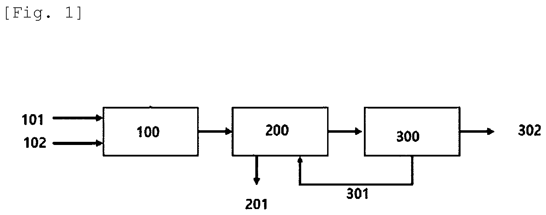

FIG. 1 schematically illustrates an exemplary process flow diagram of the present disclosure, which includes an operation 100 of forming an alkaline sodium sulfate solution by mixing sodium sulfate (Na₂SO₄) 101 and a pH adjuster 102 by stirring, or the like, and a carbonation operation 200, wherein sodium bicarbonate 201 is produced in the carbonation operation. Subsequently, an ammonia recovery process 300 may be performed, and ammonia 301 recovered in the ammonia recovery process may be added to the carbonation operation, and the remaining waste liquid may be subjected to wastewater treatment 302.

Meanwhile, the sodium sulfate solution may be obtained by dissolving a sodium sulfate-containing material, such as a desulfurization by-product, in an eluent, and may be obtained by using a material having a content of sodium sulfate of 50 wt% or more. For example, sodium sulfate-containing wastes may be produced by desulfurizing flue gas containing sulfur oxide (SOx) components with sodium bicarbonate, or may be wastes generated as by-products in lithium production plants. For example, the wastes may be generated by desulfurizing flue gas generated by combustion in thermal power plants, factories, and incinerators, or flue gas generated by electrostatic precipitation in sintering plants of steel mills using sodium bicarbonate. The sodium sulfate-containing waste may include heavy metal components such as lead (Pb) and zinc (Zn), which are eluted, and has a high content of alkaline components such as sodium (Na), potassium (K), and calcium (Ca), and also has a high content of chlorine (Cl). Most of the sodium bicarbonate used as a desulfurizing agent reacts with SOx and is converted into sodium sulfate, and some of insoluble gangue components contained in the flue gas are also included. Specifically, main crystal phases constituting the desulfurization waste are sodium sulfate, sodium chloride and potassium chloride, sodium carbonate, calcium sulfate and calcium carbonate, and include iron oxide. Among the main crystalline phases of the desulfurized dust solution, sodium sulfate, sodium chloride, and potassium chloride are highly water-soluble components, so that they may be dissolved in water to produce an alkaline desulfurized dust solution. As described above, the sodium sulfate-containing material of the present disclosure may be a desulfurization by-product.

The eluting agent is not particularly limited as long as it is a substance that can elute sodium ions when combined with a sodium sulfate-containing substance, but may be, for example, one or more selected from water and ammonia, and may be, for example, water.

More specifically, in such cases, to recover sodium sulfate in the form of a sodium sulfate solution containing sodium ions from sodium sulfate-containing wastes, a ratio of the sodium sulfate-containing waste and an eluent is important, and if a ratio of the eluent is too low, the sodium sulfate waste is not completely dissolved, resulting in a large amount of residues, which reduces a recovery rate of sodium. The ratio of the eluent in which sodium sulfate is not lost as a residue is at least 1.2 parts by weight of the eluent per 1 part by weight of the sodium sulfate waste. Preferably, 1.4 to 3 parts by weight of the eluent, for example, 2 to 3 parts by weight, are mixed per 1 part by weight of the sodium sulfate waste. When the eluent is included in an excessive amount, exceeding this range, even when carbon dioxide is subsequently dissolved in a sodiumcontaining solution, it will not be precipitated as sodium bicarbonate, and therefore the content of sodium bicarbonate flowing out in a dissolved state in the solution may be high, which lowers a recovery rate of sodium bicarbonate.

In relation to the forming an alkaline sodium sulfate solution containing the sodium sulfate (Na₂SO₄) and a pH adjuster, when carbon dioxide is dissolved in a raw material containing sodium (Na⁺), sodium bicarbonate, having the lowest solubility, is preferentially precipitated. Since carbon dioxide is an acidic gas, to be dissolved in a solution, the solution should be basic. However, when sodium sulfate is dissolved in water, a pH is neutral (~7), so carbon dioxide does not easily dissolve. Therefore, in the present disclosure, an efficient reaction may be obtained by forming an alkaline sodium sulfate solution containing sodium sulfate (Na₂SO₄) and a pH adjuster.

To this end, any substance with high basicity may serve as a pH adjuster in the sodium bicarbonate production process, but considering the purity and yield of the sodium bicarbonate, the pH adjuster of the present disclosure may be a Na⁺ series pH adjuster, i.e., sodium salt having a pH of 9 to 12. More specifically, the pH adjuster of the present disclosure may be at least one selected from the group consisting of caustic soda (NaOH, pH=13), sodium carbonate (Na₂CO₃, pH=11.7), and sodium bicarbonate, re-added, which is a basic substance of the Na+ series. In particular, since the sodium carbonate is produced by heating sodium bicarbonate (NaHCO₃), it has the advantage that can be supplied through internal circulation.

Meanwhile, after forming a mixture formed by adding an aqueous ammonia solution to an aqueous alkaline sodium sulfate solution, the carbon dioxide may be added to the mixture.

In the method for manufacturing sodium bicarbonate of the present disclosure, in each operation, the contents of sodium sulfate (Na₂SO₄), a pH adjuster, ammonia, and water may be added so that 10 to 30 wt% of sodium sulfate (Na₂SO₄), 1 to 20 wt% of a pH adjuster, 3 to 15 wt% of ammonia and a remainder of water are included, based on a weight of the mixture, and for example, may be added so that 17 to 26 wt% of sodium sulfate (Na₂SO₄), 1 to 17 wt% of a pH adjuster, 3.5 to 10 wt% of ammonia, and the remainder of water are included.

The pH adjuster not only adjusts a pH, but also acts as a bicarbonate derivative to produce sodium bicarbonate. When the pH adjuster is caustic soda, ammonia may be included in an amount of 2 to 10 wt% based on the weight of the mixture of sodium sulfate (Na₂SO₄), a pH adjuster, ammonia, and water. When the pH adjuster is sodium carbonate (Na₂CO₃), ammonia may be included in an amount of 5 to 10 wt% based on the weight of the mixture of sodium sulfate (Na₂SO₄), the pH adjuster, ammonia, and water. When the pH adjuster is outside of the scope of the present disclosure, the purity and yield of sodium bicarbonate may be reduced.

The alkaline sodium sulfate solution thus obtained may have a pH greater than 7 to a pH of 14, for example, a pH of 8 to 13.

The method for manufacturing sodium bicarbonate of the present disclosure further includes adding carbon dioxide and an aqueous ammonia solution to the alkaline sodium sulfate solution to produce sodium bicarbonate (NaHCO₃).

When the producing the sodium bicarbonate (NaHCO₃) is performed as in the present disclosure, which is distinguished from the forming the alkaline sodium sulfate solution described above, the occurrence of impurities may be reduced, so that sodium bicarbonate with high purity and yield may be manufactured.

Since carbon dioxide is an acidic gas, it dissolves easily in a sodium sulfate solution. However, if sodium bicarbonate is manufactured using only carbon dioxide and a sodium sulfate solution, the pH continuously decreases, which reduces the yield of sodium bicarbonate production. In the present disclosure, the yield of sodium bicarbonate may be improved by mixing ammonia, which can act as a pH buffer, into sodium sulfate, and therefore, for example, ammonia is mixed with a sodium sulfate solution in the form of an aqueous ammonia solution.

Generally, to dissolve ammonia in a solution such as water, ammonia in a gaseous state is aerated in an aqueous solution. However, when ammonia is aerated in the aqueous solution, the pH rises further, and in a basic aqueous solution, ammonia exists in an NH₃ state rather than an NH₄⁺ state, so it easily dissociates out of water. Therefore, there is a disadvantage, when aeration alone is insufficient to dissolve ammonia. Therefore, to produce highly concentrated ammonia water, a device dissolving ammonia gas typically operates at high pressure.

Therefore, for example, in order to sufficiently dissolve ammonia in a sodium eluent using a sodium sulfate-containing waste, ammonia may be mixed in the form of ammonia water rather than injected in the form of gas, but the form of ammonia is not particularly limited.

The aqueous ammonia solution may be included in an amount of 15 to 35 wt% based on a total weight of the sodium sulfate solution and the aqueous ammonia solution, and may be included in an amount of, for example, 32 to 33 wt%. When the pH adjuster is outside of the scope of the present disclosure, the purity and yield of sodium bicarbonate may be reduced.

Meanwhile, the sodium sulfate solution and ammonia may be mixed so that a molar ratio of ammonia (NH₃)/ sodium (Na+) is 0.9 to 1.8, and for example, 1.2 to 1.6. When the molar ratio of ammonia (NH₃)/ sodium (Na+) is outside of the present disclosure, the purity and yield of sodium bicarbonate may be reduced. In this case, if excessive amounts of ammonia are added to dissolve carbon dioxide, ammonia and carbon dioxide may react with each other to produce solid, such as ammonium carbonate ((NH₄)₂CO₃), so that the purity of sodium bicarbonate may be reduced.

When using an aqueous ammonia solution, the aqueous ammonia solution may be a 25 to 30 wt% aqueous ammonia solution, and may be included in an amount of 32 to 35 wt% based on the total content of sodium sulfate (Na₂SO₄), a pH adjuster, and an aqueous ammonia solution.

The sodium sulfate solution may react with carbon dioxide and ammonia to produce solid sodium bicarbonate through a carbonation reaction of the following Formula 1.

Na₂SO₄ + 2CO₂ +2NH₃ + 2H₂O → NaHCO₃ + (NH₄)₂SO₄ (1)

As shown in Formula 1, the Gibbs free energy of a reaction producing sodium bicarbonate is a negative number of -851.0 kJ/mol, so the reaction producing sodium bicarbonate can occur spontaneously. In addition, since this reaction is an exothermic reaction, it has the advantage of not consuming much additional energy during the sodium bicarbonate production process.

A reaction pressure of a carbonation reactor in which the carbonation reaction occurs may be 1 to 10 atm, and a reaction temperature thereof may be 80°C or less. When the pressure of the carbonation reactor exceeds 10 atm, a sufficient amount of carbon dioxide may be dissolved, but an energy required for the carbonation reactor is high, which reduces the economic feasibility of the final products, sodium bicarbonate and gypsum.

Meanwhile, the time of the carbonation reaction varies depending on a method of injecting carbon dioxide. The carbon dioxide of the present disclosure may be injected in gaseous form, and in this case, when carbon dioxide is injected in the form of gas, aeration may be performed for 4 hours or less. However, the optimized pressure and reaction time may vary depending on the size/space/conditions of the reactor.

The operation may be performed at a temperature of 25°C or higher and lower than 100°C, and when the temperature is outside of the range described above, the solubility of sodium sulfate tends to decrease, which may lower the yield.

The carbon dioxide of the present disclosure may be at least one selected from the group consisting of pure carbon dioxide, FINEX off gas (FOG), FINEX tail gas (FTG), blast furnace gas (BFG), converter gas, coal-fired power plant flue gas, gas-fired power plant flue gas, incinerator flue gas, glass melting flue gas, thermal equipment flue gas, petrochemical process flue gas, petrochemical process gas, pre-combustion flue gas, and gasifier flue gas. In addition, the carbon dioxide may be concentrated by one or more methods selected from the group consisting of a wet amine process, a PSA process, and a membrane process.

The sodium sulfate (Na₂SO₄) solution that can be used in the present disclosure may be, for example, in the form of a 30 to 35 wt% aqueous sodium sulfate solution, sodium carbonate (Na₂CO₃) may be, for example, in the form of a 30 to 35 wt% aqueous sodium sulfate solution, and NaOH may be, for example, in the form of a 50 to 60 wt% aqueous solution, but an embodiment thereof is not limited thereto.

Furthermore, an operation of washing sodium bicarbonate may be further included, and as the amount of washing increases, the purity of the produced sodium bicarbonate may be improved. A washing solution used in the washing may be, for example, one or more selected from water, an aqueous sodium solution, and an aqueous ammonia solution, and further, the solution used in the washing may be recycled as an eluent.

In addition, the washed sodium bicarbonate may further include drying and crushing operations of sodium bicarbonate. In this case, a drying temperature is preferably 50°C or lower, for example, 20 to 50°C, and preferably 40 to 50°C. If the drying temperature exceeds 50°C, a problem in that sodium bicarbonate is decomposed into sodium carbonate again occurs, and the drying process is preferably performed at a temperature exceeding a freezing point of the washing solution. Meanwhile, the crushing process can be performed using a ball mill or cutter mill, but an embodiment thereof is not limited thereto.

Meanwhile, the method for manufacturing sodium bicarbonate according to the present disclosure may further include an operation of adding a calcium-containing substance to a residue remaining after recovering the sodium bicarbonate to produce gypsum. That is, since the residue obtained after the carbonation reaction contains a large amount of sulfate ions (SO₄²⁻), a calcium-containing substance may be added to manufacture the sulfate ions contained in the residue into gypsum. In this case, a molar ratio of calcium ions and sulfate ions (Ca²⁺ : SO₄²⁻) is preferably 1:1.0 to 1.3. When the ratio of sulfate ions exceeds 1.3, the purity of gypsum decreases, and when the ratio of sulfate ions is less than 1.0, a pH of the residue is too low, which causes a problem in that ammonia cannot be sufficiently recovered in an ammonia stripping operation.

The calcium-containing material may be at least one selected from the group consisting of waste cement, waste concrete, coal ash, fly ash, iron ore slag, quicklime (CaO), calcium chloride (CaCl₂), wollastonite, limestone, olivine, serpentine, asbestos, and deinking ash.

Furthermore, the method for manufacturing sodium bicarbonate of the present disclosure may further include an ammonia recovery operation of heating the residue remaining after recovering the gypsum to recover ammonia.

It is preferable that a pH in the ammonia recovery operation be maintained at 8.0 or more. When the pH in the ammonia recovery operation is less than 8.0, there may be a problem in which a recovery rate of ammonia is reduced. In addition, in the ammonia recovery operation, the remaining residue is heated, and it is preferable that the heated residue be 50°C or more. When the temperature of the residue is less than 50°C, there may be a problem in which a recovery rate of ammonia is reduced.

The recovered ammonia can be reused in the form of gas or manufactured into ammonia water again and reused.

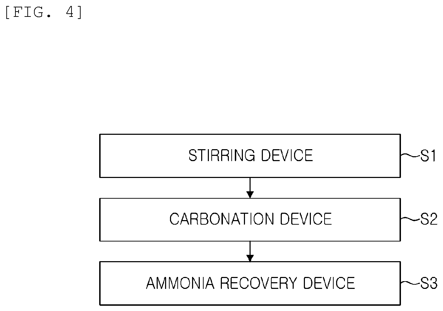

FIG. 4 of the present disclosure illustrates an exemplary device that can be used in the method for manufacturing sodium bicarbonate using sodium sulfate and a pH adjuster of the present disclosure, and as shown in FIG. 4, it can be configured to include a stirring device S1, a carbonation device S2, and an ammonia recovery device S3. In the stirring device S1, an operation of forming an alkaline sodium sulfate solution containing sodium sulfate (Na₂SO₄) and a pH adjuster may be performed, in the carbonation device S2, an operation of adding carbon dioxide and ammonia to the alkaline sodium sulfate solution to produce sodium bicarbonate (NaHCO₃) may be performed, and then in ammonia recovery device S3, an ammonia recovery operation of heating the residue remaining after recovering gypsum to recover ammonia, followed by the operation of adding a calcium-containing substance to the residue remaining after recovering the sodium bicarbonate, may be performed.

Hereinafter, the present disclosure will be described in more detail through specific Examples. The following examples are merely illustrative examples to aid understanding of the present disclosure, and the scope of the present disclosure is not limited thereto.

### Mode for Invention

### Example

### 1. Preparation of Sodium Bicarbonate and Gypsum Using Sodium Sulfate and a pH Adjuster

### Preparation Example 1

200 g of water was added to 100 g of sodium sulfate (Na₂SO₄) and stirred at 40°C for 1 hour to prepare a sodium sulfate solution with a concentration of 33 wt%.

200 g of water was added to 100 g of sodium carbonate (Na₂CO₃) in the same ratio and stirred at 40°C for 1 hour to prepare a sodium carbonate solution with a concentration of 33 wt%.

100 g of water was added to 100 g of solid NaOH and stirred for 1 hour to prepare a NaOH solution with a concentration of 50 wt%.

As shown in Table 1 below, 33 wt% sodium carbonate and 50 wt% NaOH were respectively added to 80 g of the sodium sulfate solution prepared above, placed in a reactor, and then 25 wt% ammonia water was added. In addition, carbon dioxide was injected into a reactor by bubbling at 7 bar and reacted at 40°C for 8 hours. After the reaction was completed, the resulting sodium bicarbonate slurry was subjected to solid-liquid separation. The sodium bicarbonate thus obtained was dried in an oven at 50°C for 12 hours or more, and the mass was measured to confirm the yield.

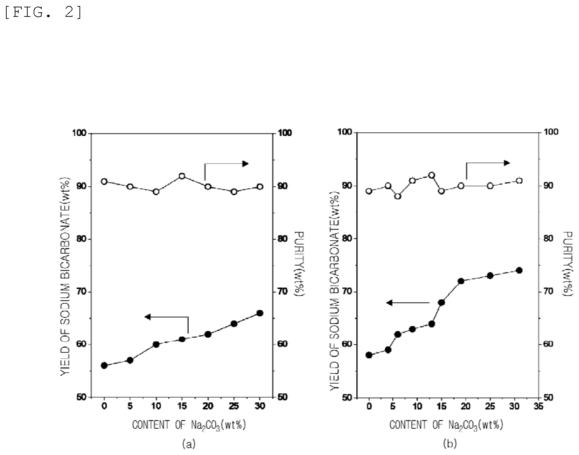

The yield of sodium bicarbonate was calculated based on an amount of sodium sulfate and sodium carbonate added and a mol of Na⁺ of the produced sodium bicarbonate. The purity of sodium bicarbonate was measured using XRD (X-ray diffraction) and ICP-MS (Inductively Coupled Plasma Mass Spectrometry) methods. The results of the yield and purity of sodium bicarbonate are shown in Table 1 and FIG. 2 below.

As a result, as shown in Table 1 below, even when the same amount of ammonia water is added, it can be confirmed that the yield of sodium bicarbonate is improved as Na₂CO₃ and NaOH are added. Meanwhile, it can be confirmed that the yield of sodium bicarbonate is even higher when NaOH having a higher pH is used.

**[Table 1] Purity and yield of sodium bicarbonate according to an amount of sodium carbonate and NaOH added**

| | 33 wt% Na₂SO₄ SOLUTION(g) | 33 wt% Na₂CO₃ SOLUTION(g) | 50 wt% NaOH SOLUTION(g) | 25 wt% AMMONI A WATER(g) | PURITY OF SODIUM BICARBONATE (%) | YIELD OF SODIUM BICARBONATE (%) |
|---|---|---|---|---|---|---|
| Comparative Example1 | 80 | 0 | 0 | 23 | 92 | 59 |
| Comparative Example2 | 80 | - | 3 | 23 | 91 | 58 |
| Example 1 | 80 | - | 5 | 23 | 92 | 62 |
| Example 2 | 80 | - | 7 | 23 | 91 | 63 |
| Example 3 | 80 | - | 10 | 23 | 90 | 64 |
| Example 4 | 80 | - | 12 | 23 | 92 | 68 |
| Example 5 | 80 | - | 15 | 23 | 91 | 72 |
| Example 6 | 80 | - | 20 | 23 | 92 | 73 |
| Example 7 | 80 | - | 25 | 23 | 91 | 74 |
| Example 8 | 80 | - | 30 | 23 | 91 | 76 |
| Example 9 | 80 | - | 35 | 23 | 92 | 80 |
| Example 10 | 80 | - | 40 | 23 | 91 | 80 |
| Example 11 | 80 | - | 45 | 23 | 90 | 79 |
| Example 12 | 80 | - | 50 | 23 | 91 | 80 |
| Example 13 | 80 | 5 | - | 23 | 92 | 57 |
| Example 14 | 80 | 10 | - | 23 | 91 | 56 |
| Example 15 | 80 | 15 | - | 23 | 92 | 61 |
| Example 16 | 80 | 20 | - | 23 | 91 | 60 |
| Example 17 | 80 | 25 | - | 23 | 90 | 62 |
| Example 18 | 80 | 30 | - | 23 | 92 | 64 |

However, as can be confirmed in Table 1 above, it could be confirmed that the yield of sodium bicarbonate improved as the amount of sodium carbonate or NaOH added increased, but did not increase exceeding 80%.

### Experimental Example 1

33 wt% solution of sodium sulfate, sodium carbonate, and NaOH was prepared by the same process as in Preparation Example 1 above. The prepared solution was added to a reactor along with 25 wt% ammonia water, as shown in Table 2 below. Reaction, drying, purity, and yield measurement conditions were all the same as those in Preparation Example 1. The results of the yield and purity of sodium bicarbonate are illustrated in Table 2.

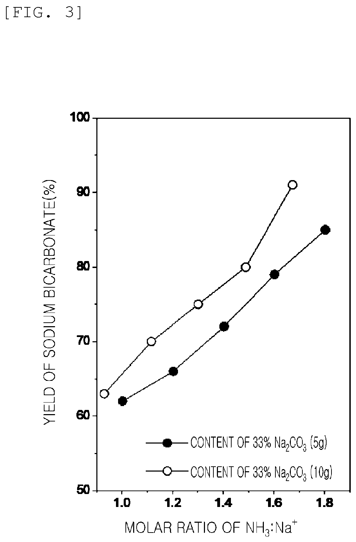

As a result, as can be seen in Table 2 and FIG. 3, when a certain amount of sodium carbonate is added and ammonia is additionally added, it can be seen that the yield of sodium bicarbonate, which had not increased further by the addition of sodium carbonate and/or NaOH, is further increased, and the purity of sodium bicarbonate is also maintained at a certain value.

Meanwhile, since 90% or more of the used ammonia may be recovered in the actual process, when a certain amount of soda ash is added and the amount of ammonia water added is increased, the purity and yield of sodium bicarbonate can be efficiently increased.

**[Table 2] Purity and yield of sodium bicarbonate according to an amount of sodium carbonate and ammonia added**

| | 33 wt% Na₂SO₄ SOLUTION(g) | 33 wt% Na₂CO₃ SOLUTION(g) | 25 TO 30 wt% AMMONIA WATER(g) | MOLAR RATIO OF NH₃:Na⁺ | PURITY OF SODIUM BICARBONATE (%) | YIELD OF SODIUM BICARBONATE (%) |
|---|---|---|---|---|---|---|
| Example 19 | 80 | 5 | 25 | 1.00 | 91 | 62 |
| Example 20 | 80 | 5 | 30 | 1.20 | 92 | 66 |
| Example 21 | 80 | 5 | 35 | 1.40 | 90 | 72 |
| Example 22 | 80 | 5 | 40 | 1.60 | 92 | 79 |
| Example 23 | 80 | 5 | 45 | 1.80 | 92 | 85 |
| Example 24 | 80 | 10 | 25 | 0.93 | 92 | 63 |
| Example 25 | 80 | 10 | 30 | 1.12 | 91 | 70 |
| Example 26 | 80 | 10 | 35 | 1.30 | 91 | 75 |
| Example 27 | 80 | 10 | 40 | 1.49 | 93 | 80 |
| Example 28 | 80 | 10 | 45 | 1.67 | 91 | 91 |

Meanwhile, in the actual process, 90% or more of ammonia may be recovered through a stripper and reused, and through the experimental results, it was confirmed that the yield may be increased by 70% or more by adding a small amount of NaOH and Na₂CO₃ even when using the same amount of ammonia.

While examples have been described in detail above, the scope of the present disclosure is not limited thereto, and it will be apparent to those skilled in the art that modifications and variations could be made without departing from the technical idea of the present disclosure described in the claims.

### Description of Reference Numerals

| | | | |
|---|---|---|---|
| 100: | Form a sodium sulfate solution through stirring, or the like | | |
| 101: | Sodium sulfate | 102: | pH adjuster |
| 200: | Carbonation reactor | | |
| 201: | Sodium bicarbonate | | |
| 300: | Ammonia recovery | | |
| 301: | Ammonia | | |
| 302: | Wastewater | | |

## Claims

1. A method for manufacturing sodium bicarbonate, comprising:
forming an alkaline sodium sulfate solution containing sodium sulfate (Na₂SO₄) and a pH adjuster; and
adding carbon dioxide and ammonia to the alkaline sodium sulfate solution to produce sodium bicarbonate (NaHCO₃).

2. The method for manufacturing sodium bicarbonate of claim 1, wherein the pH adjuster is at least one sodium salt having a pH of 9 to 12 selected from the group consisting of sodium carbonate (Na₂CO₃), caustic soda, and sodium bicarbonate.

3. The method for manufacturing sodium bicarbonate of claim 1, wherein after forming a mixture formed by adding an aqueous ammonia solution to an aqueous alkaline sodium sulfate solution, the carbon dioxide is added to the mixture.

4. The method for manufacturing sodium bicarbonate of claim 3, wherein the contents of sodium sulfate (Na₂SO₄), a pH adjuster, ammonia, and water are added so that 10 to 30 wt% of sodium sulfate (Na₂SO₄), 1 to 20 wt% of a pH adjuster, 3 to 15 wt% of ammonia, and a remainder of water are included, based on a weight of the mixture thereof.

5. The method for manufacturing sodium bicarbonate of claim 3, wherein when the pH adjuster is caustic soda, ammonia is included in an amount of 1 to 10 wt% based on the weight of the mixture of sodium sulfate (Na₂SO₄), a pH adjuster, ammonia, and water.

6. The method for manufacturing sodium bicarbonate of claim 3, wherein when the pH adjuster is sodium carbonate (Na₂CO₃), ammonia is included in an amount of 5 to 10 wt% based on the weight of the mixture of sodium sulfate (Na₂SO₄), a pH adjuster, ammonia, and water.

7. The method for manufacturing sodium bicarbonate of claim 1, further comprising:
adding a calcium-containing material to the residue remaining after recovering the sodium bicarbonate to produce gypsum.

8. The method for manufacturing sodium bicarbonate of claim 7, further comprising:
an ammonia recovery operation of heating the residue remaining after recovering the gypsum to recover ammonia.

9. The method for manufacturing sodium bicarbonate of claim 1, wherein the sodium sulfate solution and the aqueous ammonia solution are mixed so that a ratio of ammonia (NH₃)/sodium (Na+) is 0.9 to 1.8.

10. The method for manufacturing sodium bicarbonate of claim 1, wherein the carbon dioxide is injected in gaseous form.
